# EUROPÄISCHE PATENTSCHRIFT

(11) **EP 0 609 321 B1**
(45) Veröffentlichungstag und Bekanntmachung des Hinweises auf die Patenterteilung: **10.01.1996**
(21) Anmeldenummer: 92921900.4
(22) Anmeldetag: 21.10.1992
(51) Int. Cl.: A61K 9/00

(54) **STABILISIERTE KALORISCHE NÄHRLÖSUNG UND MEHRKAMMERSYSTEM FÜR DIE PARENTERALE ERNÄHRUNG DES MENSCHEN**
STABILIZED CALORIFIC NUTRIENT SOLUTION AND MULTI-CHAMBER SYSTEM FOR THE PARENTERAL FEEDING OF HUMANS
SOLUTION NUTRITIVE CALORIQUE STABILISEE ET SYSTEME A CHAMBRES MULTIPLES POUR L'ALIMENTATION PARENTERALE DE L'HOMME

(30) Priorität: 21.10.1991 DE 4134723
(43) Veröffentlichungstag der Anmeldung: 10.08.1994
(73) Patentinhaber: Pharmacia GmbH, D-91052 Erlangen (DE)
(72) Erfinder: IWATSCHENKO, Peter, D-8524 Neunkirchen/Brand (DE); KACHLER, Franz, F., D-8602 Wachenroth (DE); BUGLA, Manfred, D-8550 Forchheim (DE)
(74) Vertreter: Wibbelmann, Jobst, Dr.
(86) Internationale Anmeldenummer: EP9202416
(87) Internationale Veröffentlichungsnummer: WO9307857

(56) Entgegenhaltungen:
- EP-A- 0 101 185
- WO-A-82/03773
- DE-A- 3 814 806
- US-A- 3 950 529
- THE JOURNAL OF AGRICULTURAL AND FOOD CHEMISTRY Bd. 38, 1990, Seiten 1642 - 1647 M. FRIEDMAN ET AL. 'INHIBITION OF BROWNING BY SULFUR AMINO ACIDS'
- Derwent Publications Ltd., London, GB; AN 86-172174(27)

## Beschreibung

Die Erfindung betrifft eine von freien Aminosäuren und deren Salzen freie kalorische Nährlösung für die parenterale, z.B. intravenöse Ernährung des Menschen mit einem Gehalt an mindestens einem reduzierend wirkenden Zucker und einem Stabilisator für den oder die Zucker und gegebenenfalls weiteren üblichen bekannten Energieträgern.

Weiterhin betrifft die Erfindung ein Mehrkammersystem für die parenterale Ernährung des Menschen mit einer eine Aminosäurelösung enthaltenden Kammer und einer eine Nührlösung enthaltenden Kammer.

Es ist allgemein bekannt, zur parenteralen Ernährung des Menschen Lösungen von Aminosäuren und/oder Peptiden in Verbindung mit reduzierend wirkenden Zuckern, wie insbesondere Glucose und Fructose, sowie gegebenenfalls Fetten, Elektrolyten und Vitaminen zu verwenden.

Auch zur Verabfolgung an leber- und nierenkranke Patienten sind die verschiedensten Präparate und Fertigarzneimittel für therapeutische und/oder Nährzwecke formuliert worden, wobei dem Aminosäuremuster eine besondere Beachtung geschenkt wurde. So ist bekannt, z.B. aus der DE-OS 25 56 100, die einzelnen Aminosäuren, und zwar essentielle wie auch nichtessentielle Aminosäuren, in bestimmten relativen Verhältnissen zueinander in Form bestimmter Aminosäuremuster zu verabfolgen. Üblicherweise werden die Aminosäuren dabei als freie Aminosäuren eingesetzt. Es ist aber auch bekannt, Aminosäuresalze oder Aminosäurederivate zu verwenden. So ist es beispielsweise bekannt, das Cystein in Form des Hydrochlorides oder des N-Acetylderivates zu verwenden.

Weiterhin ist allgemein bekannt, für die parenterale und intravenöse Ernährung des Menschen Aminosäurelösungen einerseits und reduzierend wirkende Zucker enthaltende Lösungen andererseits sowie gegebenenfalls weitere Lösungen mit für die Ernährung des Menschen notwendigen Stoffen wie Fette, Peptide, Elektrolyte und Vitaminen in einem Mehrkammersystem oder Mehrfachbehältnis in den erforderlichen Mengenverhältnissen als Fertigarzneimittel abzupacken, und die einzelnen Lösungen vor der Verabfolgung an den Patienten miteinander zu vermischen. Die bekannten Mehrkammersysteme oder Mehrfachbehältnisse werden dabei in der Regel in hitzesterilisierter Form in den Handel gebracht. Die Unterbringung der Aminosäuren einerseits und der reduzierend wirkenden Zucker andererseits in getrennten Kammern bzw. Rehältnissen hat sich als erforderlich erwiesen, um unerwünschte Reaktionen zwischen den reduzierend wirkenden Zuckern und den Aminosäuren zu vermeiden.

Es ist ferner auch allgemein bekannt, daß sich bei der Hitzesterilisation von Lösungen reduzierender Zucker, wie Glucose und Fructose, hochreaktive Derivate bilden.

Es ist weiterhin bekannt, daß die Aminosäurelösungen durch die Hitzebelastung bei der Hitzesterilisation in ihrer chemischen Stabilität beeinträchtigt werden. Weiterhin sind gewisse Aminosäuren oxidationsempfindlich und ihre Reaktionsprodukte vermögen mit nicht oxidierten Aminosäuren zu reagieren.

Nach den Angaben der DE-OS 38 14 806 sollen durch Zusatz von weniger als 0,5 % Cystein, N-Acetylcystein oder deren Salzen und Ester als Antioxidantien zu Aminosäurelösungen die durch Restsauerstoff oder während der Lagerung eindiffundierten Sauerstoffs verursachte Zersetzungsreaktionen vermieden werden. In der DE-OS 38 14 806 wird somit empfohlen, Aminosäurelösungen N-Acetylcystein als Antioxidans zuzusetzen.

Überraschenderweise wurde nun jedoch gefunden, daß sich im Gegensatz zur Lehre der DE-OS 38 14 806 N-Acetylcysteinhaltige Aminosäurelösungen bei Zutritt von Sauerstoff bei der Lagerung als beträchtlich farbinstabiler erwiesen, als N-Acetylcysteinfreie Aminosäurelösungen. Aus einer Arbeit von M. Friedmann et al. mit dem Titel "Inhibition of Browning by Sulfur Amino-Acids. 1. Heated Amino-Acid-Glucose Systems", J. Agric. Food Chem. 1990, 38, 1642-1647, ist bekannt, daß Lösungen, die D-Glucose und Aminosäuren enthalten, durch Zusatz bestimmter Schwefel-enthaltender Aminosäuren stabilisiert werden können. Aufgrund dieser stabilisierenden Wirkung von beispielsweise N-Acetylcystein, können parenterale Nährlösungen, die sowohl Aminosäuren als auch reduzierende Zucker enthalten, vor der unerwünschten Maillard-Reaktion geschützt werden.

Aufgabe der Erfindung ist die Bereitstellung von für die parenterale und intravenöse Ernährung des Menschen geeigneten, in einem Mehrkammersystem oder Mehrfachbehältnis abgepackten Aminosäurelösungen und reduzierend wirkende Zucker enthaltenden Lösungen, die sich durch eine optimale Lager- und Farbstabilität auszeichnen.

Die gestellte Aufgabe wird erfindungsgemäß dadurch gelöst, daß das N-Acetylcystein nicht mehr wie bisher üblich als Bestandteil der Aminosäurelösung verwendet wird, sondern vielmehr der den oder die reduzierend wirkenden Zucker enthaltenden Lösung zugesetzt wird.

Gegenstand der Erfindung sind somit eine kalorische Nährlösung und ein Mehrkammersystem, wie in den Ansprüchen angegeben. Durch Herausnahme des N-Acetylcysteins aus der Aminosäurelösung, die gegebenenfalls auch Peptide enthalten kann, lassen sich farbstabile Lösungen mit entsprechend langer Haltbarkeitsdauer herstellen. Gleichzeitig läßt sich durch Zusatz von N- Acetylcystein zur Lösung des reduzierend wirkenden Zuckers, wie z.B. Glucose und Fructose, die Bildung der beim Abbau des Zuckers üblicherweise entstehenden hochreaktiven Derivaten wirksam unterdrücken, so daß beim Zumischen der Aminosäurelösung zur Zuckerlösung keine dieser Derivate mehr vorhanden sind, die mit den Aminosäuren farbbildende Reaktionen eingehen könnten.

Der Erfindung liegt somit die allgemeine Erkenntnis zugrunde, daß sich N-Acetylcystein hervorragend zur Stabilisierung von Lösungen reduzierend wirkender Zucker eignet, die frei von Aminosäuren sind, außer einem oder mehreren reduzierend wirkenden Zuckern jedoch noch andere für die intravenöse und parenterale Ernährung des Menschen übliche Energieträger wie z.B. Polyole, beispielsweise Xylit und/oder Disaccharide, beispielsweise Maltose, und/oder Fette und dergleichen enthalten kann.

Die erfindungsgemäße Nährlösung kann in vorteilhafter Weise 0,01 bis 50,0, vorzugsweise 0,05 bis 5,0 g/l N-Acetylcystein enthalten. Als reduzierend wirkende Zucker kommen alle reduzierend wirkenden Zucker, insbesondere Pentosen und Hexosen infrage, die zur parenteralen und intravenösen Ernährung des Menschen geeignet sind. Vorzugsweise werden Glucose und Fructose verwendet. Die Lösung kann einen Zucker oder ein Gemisch aus verschiedenen Zuckern enthalten.

Die Aminosäurelösungen können eines der üblichen bekannten Aminosäuremuster aufweisen, die für die parenterale und intravenöse Ernährung des Menschen infrage kommen. Typische derartige Muster sind z.B. aus der DE-OS 25 56 100 bekannt.

Das erfindungsgemäße Mehrkammersystem oder Mehrfachbehältnis kann außer einer Kammer oder einem Behälter für die Zuckerlösung und einer Kammer oder einem Behälter für die Aminosäurelösung gegebenenfalls noch weitere Kammern oder Behälter aufweisen, die mit anderen für die Ernährung des Menschen erforderlichen oder vorteilhaften Stoffen gefüllt sind, wie Fetten, Peptiden, Elektrolyten und/oder Vitaminen. Die Mehrfachkammern oder Mehrfachbehältnisse haben den üblichen bekannten Aufbau. Dementsprechend bestehen sie in vorteilhafter Weise aus flüssigkeitsdichten Kunststoffmaterialien. Die Mehrfachbehältnisse können jedoch auch aus anderen Materialien bestehen, z.B. aus Glas.

### Beispiel

In die Kammern eines üblichen Zweikammersystems aus Kunststoff wurden eingefüllt:

### 1.) in eine Kammer eine Aminosäurelösung folgender Zusammensetzung:

| | g/l |
|---|---|
| L- Isoleucin | 4,20 |
| L- Leucin | 5,70 |
| L- Glutaminsäure L-Lysin-Salz (1:1) 2 H2O | 15,15 |
| L- Methionin | 5,50 |
| L- Phenylalanin | 4,10 |
| L- Threonin | 5,40 |
| L- Tryptophan | 2,10 |
| L- Valin | 4,70 |
| L- Arginin | 14,00 |
| L- Histidin | 3,50 |
| L- Alanin | 26,00 |
| L- (+)-Glutaminsäure | 12,36 |
| Aminoessigsäure | 15,60 |
| L- Prolin | 14,10 |
| L- Serin | 14,10 |
| L- Acetyl-L-Tyrosin | 2,25 |
| Glycerol-1(2)-dihydrogenphosphat-Gemisch der Dinatriumsalze (30/70-G/G) 5 H2O | 6,12 |
| Natriumchlorid | 2,34 |
| Kaliumchlorid | 1,49 |
| Kalium-L-Hydrogenglutamat H2O | 4,07 |
| Calciumchlorid 2 H2O | 0,44 |
| Magnesiumchlorid 6 H2O | 1,02 |
| Zinkchlorid | 0,0082 |
| mit Wasser für Injektionszwecke aufgefüllt auf | 1000 ml |

### 2.) in die zweite Kammer eine 40 %ige Glucoselösung, die mit 0,7 g/l N-Acetylcystein versetzt worden war.

Nach dem Einfüllen der Lösungen und Verschluß der Kammern wurde das Kammersystem einer Arzneibuch üblichen Hitzesterilisation bei 121°C unterworfen. Die Sterilisationsdauer betrug 15 min.

Danach wurden die beiden Lösungen im Volumenverhältnis 1:1 miteinander vermischt. Noch 24 h nach der Vermischung trat keinerlei Verfärbung auf.

### Vergleichsbeispiel:

Das im Beispiel beschriebene Verfahren wurde im gleichen Behältnis wiederholt, mit der Ausnahme jedoch, daß auf den Zusatz von N-Acetylcystein, das im Beispiel der Zuckerlösung zugesetzt worden war, verzichtet wurde.

In diesem Fall war 24 h nach der Vermischung der beiden Lösungen eine auffällige Verfärbung als Kennzeichen rasch ablaufender chemischer Reaktionen zu beobachten.

## Patentansprüche

1. Kalorische Nährlösung für die parenterale Ernährung des Menschen mit einem Gehalt an mindestens einem reduzierend wirkenden Zucker und einem Stablisator für den oder die Zucker sowie gegebenenfalls weiteren Energieträgern und/oder Elektrolyten,
dadurch **gekennzeichnet,** daß sie in Abwesenheit freier Aminosäuren und deren Salze als Stabilisator N-Acetylcystein enthält.

2. Nährlösung nach Anspruch 1,
dadurch **gekennzeichnet,** daß sie 0,01 bis 50 g/l N-Acetylcystein enthält.

3. Nährlösung nach Anspruch 2,
dadurch **gekennzeichnet,** daß sie 0,05 bis 5 g/l N-Acetylcystein enthält.

4. Nährlösung nach einem der Ansprüche 1 bis 3,
dadurch **gekennzeichnet,** daß sie als reduzierend wirkenden Zucker Glucose und/oder Fructose enthält.

5. Nährlösung nach einem der Ansprüche 1 bis 4,
dadurch **gekennzeichnet,** daß sie bezüglich des oder der reduzierend wirkenden Zucker 2,5 bis 70 %-ig ist.

6. Nährlösung nach einem der Ansprüche 1 bis 5,
dadurch **gekennzeichnet,** daß sie als weitere Energieträger Polyole und/oder Disaccharide enthält.

7. Mehrkammersystem oder Mehrfachbehältnis für die parenterale Ernährung des Menschen mit einer/einem eine Aminosäurelösung enthaltenden Kammer bzw. Behältnis und einer/einem eine Nährlösung enthaltenden Kammer bzw. Behältnis,
dadurch **gekennzeichnet,** daß es als Nährlösung eine Lösung nach einem der Ansprüche 1 bis 3 und 4 bis 6 enthält.

## Claims

1. A calorific nutrient solution for the parenteral feeding of humans with a content of at least one reducing sugar and a stabilizer for said sugar(s) as well as optional further energy resources and/or electrolytes, **characterized in that** it contains N-acerylcysteine as a stabilizer in the absence of free amino acids and salts thereof.

2. A nutrient solution according to claim 1, **characterized in that** it contains 0.01 to 50 g/l N-acerylcysteine.

3. A nutrient solution according to claim 2, **characterized in that** it contains 0.05 to 5 g/l N-acetylcysteine.

4. A nutrient solution according to any one of claims 1 to 3, **characterized in that** it contains glucose and/or fructose as reducing sugar.

5. A nutrient solution according to any one of claims 1 to 4, **characterized in that** it amounts to 2,5 to 70 % in respect to said reducing sugar(s).

6. A nutrient solution according to any one of claims 1 to 5, **characterized in that** it contains polyols and/or disaccharides as her energy resources.

7. A multi-chamber system or multiple vessel for the parenteral feeding of humans with a chamber and vessel, respectively, containing a amino acid solution and a chamber and vessel, respectively, containing a nutrient solution, **characterized in that** it contains a solution according to any one of claims 1 to 3 and 4 to 6 as nutrient solution.

## Revendications

1. Solution nutritive calorique destinée à l'alimentation parentérale de l'homme contenant au moins un sucre ayant une action réductrice et un stabilisant dur le ou les sucres, ainsi que, le cas échéant, d'autres porteurs d'énergie et/ou des électrolytes, caractérisée en ce qu'elle contient, en l'absence d'acides aminés libres et de leurs sels, de la N-acétylcystéine comme stabilisant.

2. Solution nutritive selon la revendication 1, caractérisée en ce qu'elle contient de 0,01 à 50 g/l de N-acétylcystéine.

3. Solution nutritive selon la revendication 2, caractérisée en ce qu'elle contient de 0,05 à 5 g/l de N-acétylcystéine.

4. Solution nutritive selon l'une quelconque des revendications 1 à 3, caractérisée en ce qu'elle contient comme sucre ayant une action réductrice du glucose et/ou du fructose.

5. Solution nutritive selon l'une quelconque des revendications 1 à 4, caractérisée en ce que sa concentration en le ou les sucres ayant une action réductrice est de 2,5 à 70%.

6. Solution nutritive selon l'une quelconque des revendications 1 à 5, caractérisée en ce qu'elle contient des polyols et/ou des disaccharides comme autres porteurs d'énergie.

7. Système à plusieurs chambres ou récipient multiple pour l'alimentation parentérale de l'homme, une chambre ou un récipient contenant une solution d'acides aminés et une chambre ou un récipient contenant une solution nutritive, caractérisé en ce qu'il contient comme solution nutritive une solution selon l'une quelconque des revendications 1 à 3 et 4 à 6.
